# EUROPÄISCHE PATENTSCHRIFT

(11) **EP 3 142 874 B1**
(45) Veröffentlichungstag und Bekanntmachung des Hinweises auf die Patenterteilung: **28.02.2024**
(21) Anmeldenummer: 15724941.8
(22) Anmeldetag: 13.05.2015
(51) Int. Cl.: B60H 1/00, B60H 1/32

(54) **VERFAHREN ZUR UMRÜSTUNG EINES BUSKLIMASYSTEMS**
PROCEDURE FOR RETROFITTING A BUS AIRCONDITIONING SYSTEM
PROCÉDÉ POUR LA MODIFICATION D'UN SYSTÈME DE CLIMATISATION D'AUTOBUS

(30) Priorität: 14.05.2014 DE 102014006965
(43) Veröffentlichungstag der Anmeldung: 22.03.2017
(73) Patentinhaber: Bock GmbH, 72636 Frickenhausen (DE)
(72) Erfinder: SANDKÖTTER, Wolfgang, 72636 Frickenhausen (DE)
(74) Vertreter: Mederle-Hoffmeister, Stefan
(86) Internationale Anmeldenummer: PCT/EP2015/000987
(87) Internationale Veröffentlichungsnummer: WO 2015/172883

(56) Entgegenhaltungen:
- GB-A- 2 196 759
- JP-U- S5 231 152
- US-A- 5 247 808
- US-A1- 2013 154 356

## Beschreibung

Die vorliegende Erfindung betrifft ein Verfahren zur Umrüstung eines Busklimasystems gemäß Patentanspruch 1.

Busklimaanordnungen und Dieselmotor-betriebene Busse mit solchen sind im Stand der Technik hinlänglich bekannt. Diese weisen einen Verdichter zum Verdichten von Kältemittel, der in einem entsprechenden Aufnahmeraum in einem Dieselmotor oder einem Einbauraum für den Dieselmotor des Busses angeordnet ist, auf, welcher mittels eines Riementriebs mit dem Dieselmotor in Verbindung steht und von diesem angetrieben wird. Ferner weisen solche Klimasysteme in der Regel einen Kondensator, ein Expansionsorgan in Form eines Expansionsventils und einen Verdampfer zur Klimatisierung des Busses auf.

Aufgrund der Anordnung des Verdichters ist dieser mannigfaltigen störenden Einflüssen ausgesetzt, beispielsweise Vibrationen, Wärme etc. Dies kann zu Leckagen am Verdichter oder insbesondere an Anschlüssen desselben, über welche das Kältemittel in den Kältekreislauf der Anordnung gelangt führen. Ferner muss ein Verdichter derart ausgelegt sein, dass er bereits bei einer Leerlaufdrehzahl des Dieselmotors eine deutlich spürbare Kälteleistung erbringt, beispielsweise wenigstens 50% der Maximalleistung der Anordnung. Hierzu muss der Verdichter in der Regel übermäßig leistungsstark ausgelegt sein, wobei insbesondere bei hohen Drehzahlen des Dieselmotors die Förderleistung des Verdichters entsprechend begrenzt werden muss.

Das Dokument GB 2 196 759 A offenbart eine Busklimaanordnung mit einem im Motorraum angeordneten Generator und einem elektrisch angetriebenen Verdichter in der Aufdachklimaanlage.

Es ist Aufgabe der vorliegenden Erfindung, ein Verfahren zur Umrüstung eines Busklimasystems anzugeben, bei dem ein Verdichter möglichst klein dimensioniert werden kann, wobei insbesondere an dem Bus und auch einem Dieselmotor desselben nur möglichst geringe konstruktiven Eingriffe nötig werden sollen.

Diese Aufgabe wird erfindungsgemäß durch ein Verfahren zur Umrüstung eines Busklimasystems gemäß Patentanspruch 1 gelöst.

Demnach wird die vorliegende Aufgabenstellung durch ein Verfahren zur Umrüstung eines Busklimasystems gelöst, das einen vorhandenen Verdichter zum Verdichten von Kältemittel aufweist, wobei der vorhandene Verdichter in einem Abmessungen zur Aufnahme des Verdichters aufweisenden Aufnahmeraum in einem Dieselmotor eines Busses angeordnet ist, das folgende Schritte aufweist:
- ein Entfernen des vorhandenen Verdichters aus dem Aufnahmeraum
- ein Anordnen bzw. Anbringen eines elektrischen Generators in einem in einem Dieselmotor eines Busses angeordneten Aufnahmeraum, welcher Abmessungen zur Aufnahme eines Verdichters aufweist, wobei der Verdichter derartige Abmessungen aufweist, dass er in dem Aufnahmeraum anbringbar ist;
- ein Anordnen bzw.Anbringen eines Verdichters, der einen Elektromotor sowie eine durch den Elektromotor angetriebene Verdichtungsvorrichtung zum Verdichten von Kältemittel aufweist außerhalb des Dieselmotors des Busses;
- wobei der Verdichter durch die von dem Generator erzeugte elektrische Leistung angetrieben wird.

Dadurch kann der Verdichter außerhalb des Dieselmotors und auch außerhalb des Einbauraums für den Antriebsmotor angeordnet werden. Ein möglicher Ort zur Anordnung ist beispielsweise das Dach des Busses, insbesondere wenn dort auch der Großteil der restlichen Bestandteile der Busklimaanordnung angeordnet ist, beispielsweise in Form eines auf dem Dach zu montierenden Klimamoduls.

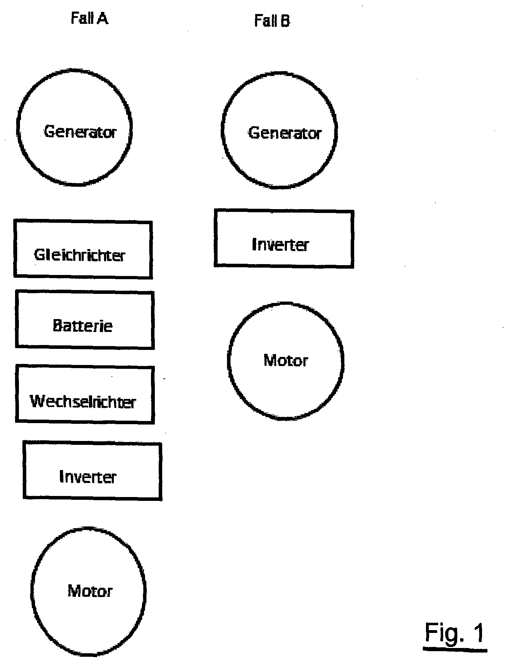

Weitere optionale Merkmale der Erfindung sind in den Unteransprüchen, Die beigefügte Zeichnung zeigt eine schematische Darstellung eines Aufbaus einer Busklimaanordnung.

Erfindungsgemäß wird bei einer Busklimaanordnung in einem in einem Antriebsmotor (der in der beschriebenen Ausführungsform in Form eines Verbrennungsmotors ausgebildet ist, der wiederum in Form eines Dieselmotors ausgebildet ist) eines Busses oder einem Einbauraum für den Antriebsmotor, genauer Dieselmotor des Busses angeordneten Aufnahmeraum, welcher Abmessungen zur Aufnahme eines Verdichters aufweist, anstelle eines Verdichters ein Generator angeordnet, der an den Dieselmotor angebaut ist. Es sei an dieser Stelle angemerkt, dass der Antriebsmotor in alternativen Ausführungsformen beispielsweise auch ein Gas- oder ein Benzinmotor sein kann. Der Generator hat vorzugsweise die gleichen Anschlussmaße wie die heute üblichen Verdichter haben, zumindest jedoch Abmessungen, die eine Aufnahme in dem besagten Aufnahmeraum ermöglichen. Damit ist es möglich, in jeden Bus, der einen Verdichter hat oder zur Ausstattung mit einem Verdichter vorgesehen ist, diesen Generator einzubauen. Der Generator ist in der vorliegend beschriebenen Ausführungsform auf eine übliche Spannung ausgelegt, z.B. 400V bei 100Hz und 3000 Umdrehungen pro Minute.

Mit der von dem Generator erzeugten Leistung wird eine Klimaanlage mit einem oder (in alternativen Ausführungsformen) mehreren elektrisch angetriebenen Verdichter(n) betrieben. Alternativ können auch mehrere eigenständige Klimaeinheiten, die jeweils einen oder mehrere Verdichter aufweisen können, betrieben werden.

Der Verdichter ist halbhermetisch, in alternativen Ausführungsformen hermetisch ausgeführt. Der Verdichter wird so betrieben, dass er genau die Kälteleistung zur Verfügung stellt, die das Fahrzeug gerade benötigt. Dazu muss der Verdichter regelbar sein, hierzu ist eine Drehzahlregelung mit einem Inverter vorgesehen.

Der Generator kann so übersetzt werden, dass der bereits bei Leerlaufdrehzahl des Dieselmotors eine ausreichende Leistung abgibt, um den Bus abzukühlen. Bevorzugter Weise kann die Auslegung z.B. so sein, dass bereits bei Leerlaufrehzahl 50% der Maximalleistung zur Verfügung steht, womit die Kälteleistung der Fahrzeugklimaanlage auch bereits 50% betragen kann und somit einer konventionellen Anlage mit vom Dieselmotor angetriebenen Verdichter weit überlegen ist. Bei einem vom Dieselmotor angetriebenen Verdichter, üblicherweise Verdränger Maschinen, ändert sich die Kälteleistung in erster Linie proportional mit der Drehzahl. Um also bei Motorleerlauf eine ausreichende Kälteleistung zu erzielen, muss der Verdichter entsprechend stark dimensioniert werden, was zu einer zu hohen Kälteleistung bei hohen Drehzahlen führt, die wiederum eine Regelung des Verdichters erfordern. Aufgrund der linearen Charakteristik eines Verdränger-Verdichters ist die Regelung verlustbehaftet.

Ein Generator hingegen kann wesentlich effizienter und breitbandiger geregelt werden. Z. B. kann dessen Drehzahl gegenüber einem Verdichter angehoben werden und bei Überschreiten der Nennleistung und der Nenndrehzahl kann der Generator auf konstanter Leistung gehalten werden, mit deutlich weniger Verlusten als ein Verdichter.

Deshalb wird gemäß der beschriebenen möglichen Ausführungsform vorgeschlagen, den Generator, der als Asynchronmaschine oder als Synchronmaschine ausgeführt werden kann, auch als Permanent-Magnet (PM)-Maschine, ausgangsseitig zu regeln. Dazu ist eine elektronische Steuereinheit vorgesehen, die die variable (drehzahlabhängige) Ausgangsspannung und -frequenz des Generators in einen Zwischenkreis einspeist. Dort wird sie standardisiert und entsprechend dem Bedarf der Kälteanlage in eine passende Ausgansspannung und -frequenz umgewandelt.

In der beschriebenen Ausführungsform sind die beiden Regelungen (des Verdichters und des Generators) in einem einzigen Regelorgan zusammengefasst, nämlich in einem eingangs- und ausgangsseitig mit variabler Frequenz betreibbaren Inverter. Alternativ ist es möglich, beide Regelungen zu trennen und als zwei separate Regelungen auszulegen.

Eine relativ einfache Ausführung einer Busklimaanordnung bzw. einer Kälteanlage mit Generator ist in der beigefügten Figur als Fall B dargestellt. Anstelle eines Verdichters mit Magnetkupplung und Riementrieb findet sich dort ein vom Riemen angetriebener Generator, ein Inverter und ein elektrisch betriebener Verdichter. Diese Lösung entspricht einer "Drop In" Lösung, die auf alle bestehenden Fahrzeuge mit Standardverdichtern anwendbar ist.

Die Vorteile der erfindungsgemäßen Konstruktion sind mannigfaltig:
- der elektrische Verdichter kann direkt in die Kälteanlage integriert werden. Damit wird das System kompakter und weist weniger Leitungslänge und weniger Kältemittelfüllung auf;
- der elektrische Verdichter wird bedarfsgerecht betrieben und kann damit bis zu 70% Energie einsparen, obwohl die beiden elektrischen Maschinen verlustbehaftet sind;
- die elektrischen Maschinen können mit Wirkungsgraden von 0,9 oder besser ausgeführt werden, was heute Stand der Technik ist und deutlich über den heutigen Fahrzeug typischen 24V Generatoren liegt;
- der elektrische Verdichter kann hermetisch oder halbhermetisch ausgeführt werden und benötigt keine Wellenabdichtung. Damit ist das Leckage-Risiko deutlich vermindert;
- durch die Entkoppelung vom Dieselmotor und dessen Umgebung sind die Arbeits- und Funktionsbedingungen des Verdichters signifikant verbessert und liegen ähnlich wie bei stationären Anlagen;
- durch das kompakte, geschlossenen System und die bedarfsgerechte Betreibbarkeit sinkt der Wartungsbedarf und die Zuverlässigkeit steigt;
- da Zuverlässigkeit, Dichtigkeit und Regelbarkeit jetzt mit einem stationären System vergleichbar sind, kann für das neue System auch CO₂ serienmäßig als Kältemittel zur Anwendung kommen;
- mit COz steht dann eine nachhaltige und umweltfreundliche Lösung zur Verfügung;
- ein solches System kann -gerade mit CO₂- auch hervorragend zur Beheizung des Fahrzeugs im Winter eingesetzt werden.

Es wird also weiter vorgeschlagen, CO₂ als Kältemittel einzusetzen.

Neben der "Drop in" Lösung kann auch ein erweitertes System, in der Figur unter "Fall A" dargestellt, Verwendung finden. Diese Ausführungsform weist neben dem Generator und dem Motor des Verdichters einen Gleichrichter, eine Batterie, einen Wechselrichter und einen Inverter auf. Mit einer Zwischenspeicherung elektrischer Leistung in der Batterie bestünde die Möglichkeit, die Kälteanlage auch beim Stillstand des Dieselmotors zu betreiben. Ferner könnten weitere Verbraucher an die effiziente Spannungsquelle angeschlossen werden. Z. B. wäre es denkbar, anstelle der heute gebräuchlichen 24V Generatoren mit Wirkungsgraden von ungefähr 50% den Strom aus dem neuen Hochspannungskreis, d.h. also von dem Generator, der auch zum Antrieb des Verdichters vorgesehen ist, zu beziehen und zwar vorzugsweise über einen Gleichrichter/Spannungswandler.

Eine mögliche Ausgestaltung des Verfahrens sieht vor, dass die Drehzahl des Verdichters mittels einer Verdichter-Drehzahlsteuer- oder -regelvorrichtung, die insbesondere einen Inverter aufweist, steuerbar oder regelbar ist und/oder dass eine Ausgangsspannung und eine Ausgangsfrequenz des Generators steuerbar oder regelbar ist.

Eine weitere mögliche Ausgestaltung des Verfahrens sieht vor,die Drehzahl des Verdichters und eine Ausgangsspannung und eine Ausgangsfrequenz des Generators mittels eines einzigen Inverters steuerbar oder regelbar ist.

## Patentansprüche

1. Verfahren zur Umrüstung eines Busklimasystems, das einen vorhandenen Verdichter zum Verdichten von Kältemittel aufweist, wobei der vorhandene Verdichter in einem Abmessungen zur Aufnahme des Verdichters aufweisenden Aufnahmeraum in einem Antriebsmotor eines Busses angeordnet ist, das folgende Schritte aufweist:
- ein Entfernen des vorhandenen Verdichters aus dem Aufnahmeraum
- ein Anordnen bzw. Anbringen eines elektrischen Generators in einem in einem Antriebsmotor des Busses oder einem Einbauraum für den Antriebsmotor des Busses angeordneten Aufnahmeraum, welcher Abmessungen zur Aufnahme eines Verdichters aufweist, wobei der Generator derartige Abmessungen aufweist, dass er in dem Aufnahmeraum anbringbar ist;
- ein Anordnen bzw. Anbringen eines Verdichters, der einen Elektromotor sowie eine durch den Elektromotor angetriebene Verdichtungsvorrichtung zum Verdichten von Kältemittel aufweist, außerhalb des Antriebsmotors des Busses und außerhalb des Einbauraums für den Antriebsmotor des Busses;
- wobei der Verdichter durch die von dem Generator erzeugte elektrische Leistung angetrieben wird.

2. Verfahren nach Anspruch 1,
**dadurch gekennzeichnet, dass**
die Drehzahl des Verdichters mittels einer Verdichter-Drehzahlsteuer- oder -regelvorrichtung, die insbesondere einen Inverter aufweist, steuerbar oder regelbar ist und/oder dass eine Ausgangsspannung und eine Ausgangsfrequenz des Generators steuerbar oder regelbar ist.

3. Verfahren nach einem der Ansprüche 1 oder 2,
**dadurch gekennzeichnet, dass**
die Drehzahl des Verdichters und eine Ausgangsspannung und eine Ausgangsfrequenz des Generators mittels eines einzigen Inverters steuerbar oder regelbar ist.

## Claims

1. Method for modifying a bus air-conditioning system which has an existing compressor for compressing refrigerant, wherein the existing compressor is arranged in an accommodation space, which is dimensioned to accommodate the compressor, in a drive motor of a bus, which method comprises the following steps:
- removing the existing compressor from the accommodation space;
- arranging or fitting an electrical generator in an accommodation space which is arranged in a drive motor of the bus or an installation space for the drive motor of the bus and which is dimensioned for accommodating a compressor, wherein the generator is dimensioned in such a way that it can be fitted in the accommodation space;
- arranging or fitting a compressor, which has an electric motor and also a compression apparatus, which is driven by the electric motor, for compressing refrigerant, outside the drive motor of the bus and outside the installation space for the drive motor of the bus;
- wherein the compressor is driven by the electrical power which is generated by the generator.

2. Method according to Claim 1,
**characterized in that**
the rotation speed of the compressor can be subjected to open-loop control or can be subjected to closed-loop control by means of a compressor rotation speed open-loop control or closed-loop control apparatus which, in particular, has an inverter, and/or **in that** an output voltage and an output frequency of the generator can be subjected to open-loop control or can be subjected to closed-loop control.

3. Method according to either of Claims 1 and 2,
**characterized in that**
the rotation speed of the compressor and an output voltage and an output frequency of the generator can be subjected to open-loop control or can be subjected to closed-loop control by means of a single inverter.

## Revendications

1. Procédé de transformation d'un système de climatisation d'autobus, lequel possède un compresseur présent servant à compresser du fluide frigorigène, le compresseur présent étant disposé dans un espace d'accueil qui présente des dimensions permettant d'accueillir le compresseur dans un moteur de propulsion d'un autobus, lequel comprend les étapes suivantes :
- retrait du compresseur présent hors de l'espace d'accueil
- arrangement ou montage d'un générateur électrique dans un espace d'accueil disposé dans un moteur de propulsion de l'autobus ou un espace d'installation pour le moteur de propulsion de l'autobus, lequel présente des dimensions permettant d'accueillir le compresseur, le générateur présentant des dimensions telles qu'il peut être monté dans l'espace d'accueil ;
- arrangement ou montage d'un compresseur, lequel possède un moteur électrique ainsi qu'un dispositif de compression entraîné par le moteur électrique et destiné à compresser du fluide frigorigène, en-dehors du moteur de propulsion de l'autobus et en-dehors de l'espace d'installation pour le moteur de propulsion de l'autobus ;
- le compresseur étant entraîné par la puissance électrique générée par le générateur.

2. Procédé selon la revendication 1, **caractérisé en ce que** la vitesse de rotation du compresseur peut être commandée ou régulée au moyen d'un dispositif de commande ou de régulation de vitesse de rotation de compresseur, lequel possède notamment un convertisseur, et/ou **en ce qu'**une tension de sortie et une fréquence de sortie du générateur peut être commandée ou régulée.

3. Procédé selon l'une des revendications 1 ou 2, **caractérisé en ce que** la vitesse de rotation du compresseur et une tension de sortie et une fréquence de sortie du générateur peut être commandée ou régulée au moyen d'un seul convertisseur.
